(19)

Europäisches
Patentamt
European
Patent Office
Office européen
des brevets

(11) **EP 4 529 965 A1**

(12) **EUROPEAN PATENT APPLICATION**

(43) Date of publication:
**02.04.2025 Bulletin 2025/14**

(21) Application number: **23200832.6**

(22) Date of filing: **29.09.2023**

(51) International Patent Classification (IPC):
**B01D 3/22** (2006.01)      **B01D 53/18** (2006.01)

(52) Cooperative Patent Classification (CPC):
**B01D 3/22; B01D 53/18**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Yara International ASA
0277 Oslo (NO)**

(72) Inventors:
• **RÖSLER, Ronald**
  3936 Porsgrunn (NO)
• **YAZGAN-BIRGI, Pelin**
  3936 Porsgrunn (NO)
• **BUJALSKI, Jakub**
  3936 Porsgrunn (NO)

(74) Representative: **De Clercq & Partners
Edgard Gevaertdreef 10a
9830 Sint-Martens-Latem (BE)**

(54) **SIEVE TRAY FOR ABSORBER**

(57)      The present disclosure provides a circular sieve tray for an absorber, wherein the circular sieve tray is a perforated plate comprising through-holes, the circular sieve tray comprising a through-hole named downcomer, a weir, an outlet calming zone, an inlet calming, and a manhole.

Figure 1

EP 4 529 965 A1

**Description**

**Field of the disclosure**

The present disclosure is related to the field of chemical engineering, in particular absorbers.

**Background information**

An absorber or absorption tower is device configured to receive a gas stream comprising a compound, in particular a gas stream comprising nitrogen dioxide ($NO_2$), and produce an aqueous solution comprising this compound or a derivative of this compound, in particular an aqueous solution comprising nitric acid. The aqueous solution is formed by contacting the gas stream with water or an aqueous solution.

To increase the efficiency of the absorber, it is important to increase the surface of contact between the gas stream and water or the aqueous solution. A way to achieve this is to install sieve trays in the absorber. Sieve trays have about the same size as the cross-section of the absorber and comprise a plurality of through-holes through which the gas stream goes. The aqueous solution configured to interact with the gas stream is constantly running on top of the sieve tray, such that the bubbles of gas stream created by the through-holes come in direct contact with the aqueous solution, and the compounds comprised in the gas stream can react with and/or dissolve in the aqueous solution.

The reactions happening at the gas-liquid interface and inside the aqueous solution may be exothermic, such as the absorption of nitrogen dioxide in water to form nitric acid. So, it may be required that the sieve tray is configured to accommodate cooling means, such as coils configured to transport a cooling liquid. In addition, sieve trays must comprise a downcomer area, i.e., an area where the aqueous solution can flow downwards, and a manhole to allow humans, such as maintenance personnel, to go through a sieve tray to access another sieve tray located below or above.

The position of all these elements must be carefully designed to allow for optimal performance and safety of the absorber.

**Summary of the disclosure**

In a first aspect, the present disclosure provides a circular sieve tray for an absorber, wherein the circular sieve tray is a perforated plate comprising through-holes, the circular sieve tray comprising: a downcomer, wherein the downcomer is a through-hole segment of the circular sieve tray delimited by a chord and the associated arc of the circular sieve tray; a weir located on the chord of the downcomer for maintaining a set level of liquid on top of the circular sieve tray in operation;

- an outlet calming zone free of any through-holes, wherein the outlet calming zone is delimited by the chord of the downcomer and a second chord parallel to the chord of the downcomer, wherein the difference between the angle subtended at the center of the circular sieve tray by the second chord and the angle subtended at the center of the circular sieve tray by the cord of the downcomer ranges between 0.50° and 10.0°;
- an inlet calming zone free of any through-holes, the inlet calming zone being a segment of the circular sieve tray delimited by a chord and its associated arc of the circular sieve tray, the inlet calming zone having the same surface area as the downcomer and being positioned diametrically opposed to the downcomer;
- a manhole, wherein:

    ◦ the distance between the centroid of the manhole and the and the perpendicular projection of said centroid on the diameter of the circular sieve tray perpendicular to the diameter bisecting the downcomer, is less than 20% of the radius of the circular sieve tray;
    ◦ the distance from the center of the circular sieve tray to the centroid of the manhole is at least 80%% of the radius of the circular sieve tray.

In another aspect, the present disclosure provides an absorption tower for nitric acid production comprising one or more circular sieve trays according to the present disclosure.

In another aspect, the present disclosure provides a method for producing nitric acid comprising the steps of:

a) directing a gaseous stream comprising nitrogen dioxide to the bottom of an absorption tower according to the present disclosure; and
b) directing an aqueous solution to a liquid inlet of the absorption tower according to the present disclosure.

## Brief description of the figures

The following description of the figure of a specific embodiment of a system according to the present disclosure is only given by way of example and is not intended to limit the present explanation, its application or use. In the figure, identical reference numerals refer to the same or similar parts and features.

Figure 1 shows an embodiment of a sieve tray according to the present disclosure.
Figure 2 shows another embodiment of a sieve tray according to the present disclosure.
Figure 3 shows another embodiment of a sieve tray according to the present disclosure.

## Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:

"A", "an", and "the" as used herein refers to both singular and plural referents unless the context clearly dictates otherwise. By way of example, "a tray" refers to one or more than one tray.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows, e.g., component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

In a first aspect, the present disclosure provides a circular sieve tray for an absorber, wherein the circular sieve tray is a perforated plate comprising through-holes, the circular sieve tray comprising:

- a downcomer, wherein the downcomer is a through-hole segment of the circular sieve tray delimited by a chord and the associated arc of the circular sieve tray;
- a weir located on the chord of the downcomer for maintaining a set level of liquid on top of the circular sieve tray in operation;
- an outlet calming zone free of any through-holes, wherein the outlet calming zone is delimited by the chord of the downcomer and a second chord parallel to the chord of the downcomer, wherein the difference between the angle subtended at the center of the circular sieve tray by the second chord and the angle subtended at the center of the circular sieve tray by the cord of the downcomer ranges between 0.50° and 10.0°;
- an inlet calming zone free of any through-holes, the inlet calming zone being a segment of the circular sieve tray delimited by a chord and its associated arc of the circular sieve tray, the inlet calming zone having the same surface area as the downcomer and being positioned diametrically opposed to the downcomer;
- a manhole, wherein:

  ○ the distance between the centroid of the manhole and the and the perpendicular projection of said centroid on the diameter of the circular sieve tray perpendicular to the diameter bisecting the downcomer, is less than 20% of the radius of the circular sieve tray;
  ○ the distance from the center of the circular sieve tray to the centroid of the manhole is at least 80%% of the radius of the circular sieve tray.

There are two main designs of absorption towers used industrially today, in particular for the production of nitric acid: towers with packed beds or with sieve trays. Towers with sieve trays comprise a plurality of sieve trays distributed within the tower. The purpose of each tray is to provide an extended gas-liquid interaction to favor the absorption of the compound comprised in the gas stream, in particular the nitrogen dioxide comprised therein, into the liquid phase, an aqueous solution.

In order to be functional, a sieve tray must comprise these features:

- a perforated plate comprising through-holes for allowing the gas stream to go through the sieve tray and interact with the aqueous solution;
- one or more downcomer, a downcomer being a through-hole that is configured for allowing the aqueous solution to fall to the next sieve tray located below;
- an outlet calming zone located between the through-holes and the one or more downcomer, the outlet calming zone being free of any through-hole and configured to allow some or all the gas comprised in the aqueous solution to evacuate the aqueous solution;

- an inlet calming zone for receiving the aqueous solution from the sieve tray located above;
- a manhole for allowing a person to access the sieve trays located above and below; and
- a weir for maintaining a certain level of aqueous solution on top of the sieve tray.

When installed in an absorption tower, a sieve tray may be equipped with one or more cooling coils on the surface of the sieve tray comprising through-holes. The one or more cooling coils are tubes that are configured to contain a cooling liquid in operation. In some embodiments, the absorption reaction is exothermic, such as for the production of nitric acid, and the one or more cooling coils are configured to maintain the aqueous solution within a suitable range.

The perforated plate comprises two types of through-holes: the one or more downcomer, and the through-holes. The downcomer has usually a much larger diameter than the through-holes since its role is to let through the aqueous solution, whereas the through-holes are configured to let a gas stream go through the sieve tray.

Within these constraints, a new design for a sieve tray was found. The new design provides a sieve tray with:

- a high downcomer area that allows for a high flow of aqueous solution to go through it;
- a high active area, i.e., the area of the sieve tray that comprises through-holes, wherein the absorption reactions occur; and
- a small zone not comprising a through-hole or a downcomer.

The main reaction taking place in an absorption tower is the interaction of a gaseous phase with a liquid phase, but in some cases, reactions can also occur in the gas phase. This is the case in an absorption tower for nitric acid production: the main reaction is the formation of nitric acid according to Equation 1 below.

$$3\ NO_2\ (g) + H_2O\ (l) \rightarrow 2\ HNO_3(aq) + NO(g) \qquad \text{(Equation 1)}$$

However, this reaction also produces nitric oxide (NO), which reacts with the oxygen present in the gas phase of the tower, to form nitrogen dioxide according to Equation 2 below.

$$2\ NO\ (g) + O_2\ (g) \rightarrow 2\ NO_2\ (g) \qquad \text{(Equation 2)}$$

It was calculated, via computational fluid dynamics, that the gas velocity in certain zones, such as the volumes located above the zones that did not comprise a through-hole or a downcomer, was very low, indicating that the gas-liquid contact was reduced, leading to a reduced absorption rate, and that the reactions in the gas phase are also reduced. So having a small zone that does not comprise a through-hole or a downcomer, such as the inlet calming zone, increases the overall performance of the absorption tower.

The sieve tray according to the present disclosure comprises a downcomer, wherein the downcomer is a through-hole segment of the sieve tray delimited by a chord and its associated arc of the sieve tray. The chord and associated arc defining the downcomer have the same endpoints. In conventional sieve trays, the downcomers are often circular through-holes surrounded by non-perforated material. Instead, in the new design, the downcomer is an entire segment of the tray. This increases the size of the downcomer without reducing the size of the zone comprising the through-holes.

The sieve tray according to the present disclosure comprises a weir located on the chord of the downcomer for maintaining a set level of liquid on top of the circular sieve tray in operation. The height of the weir determines the height of liquid that is on the sieve tray under operation. In some embodiments, the weir extends below the sieve tray. The weir may extend below the sieve tray to control the flow of the aqueous solution onto the sieve tray below. In some embodiments, the weir extends below the sieve tray by a distance equal to 50 to 80% of the distance between two sieve trays.

The sieve tray according to the present disclosure comprises an outlet calming zone free of any through-holes, wherein the outlet calming zone is delimited by the chord of the downcomer and a second chord parallel to the chord of the downcomer, wherein the difference between the angle subtended at the center of the sieve tray by the second chord and the angle subtended at the center of the sieve tray by the cord of the downcomer ranges between 0.50° and 10.0°. The outlet calming zone is a zone that is free of any through-holes, such that the gas does not go through the sieve tray in the calming zone. The outlet calming zone is located between the area comprising through-holes and the downcomer and allows the gas comprised in the aqueous solution to evacuate the solution. When the gas stream comes into contact with the aqueous solution above the through-holes, a froth is formed. The volume of a froth is much greater than that of the aqueous solution, which would require a much greater downcomer to allow it to go through. Instead, the outlet calming zone allows some of the gas to escape from the froth and reduces the volume of the liquid that has to go through the downcomer.

The sieve tray according to the present disclosure comprises an inlet calming zone free of any through-holes, the inlet calming zone being a segment of the circular sieve tray delimited by a chord and its associated arc of the sieve tray, the inlet calming zone having the same surface area as the downcomer and being positioned diametrically opposed to the downcomer. The inlet calming zone is the zone of the sieve tray that will be directly under the downcomer of the sieve tray located above said tray. It is desirable for the inlet calming zone to be free of any through-holes to allow the aqueous solution to settle and start flowing above said sieve tray. The chord and associated arc defining the inlet calming zone have the same endpoints.

As stated above, a sieve tray must comprise a manhole to allow personnel to access the sieve trays located above and/or below said sieve tray. In the present disclosure:

- the distance between the centroid of the manhole and the diameter of the sieve tray perpendicular to the diameter bisecting the downcomer, is less than 20% of the radius of the sieve tray;
- the distance from the center of the sieve tray to the centroid of the manhole is at least 80%; and
- the manhole is covered by a lid comprising through-holes.

A manhole can be defined as a through-hole large enough to let a human go through, it is covered by a lid made of the same material as the sieve tray. The manhole of a sieve tray is covered by a lid that comprises through-hole such that the gas stream can go through.

The manhole cannot be covered by a cooling coil as this would not be practical, so it was found that by selecting carefully the location of the manhole a greater surface of the sieve tray could be covered by one or more cooling coils while keeping a simple design of these cooling coils. In conventional sieve trays, the manhole is often found in the same segment as the downcomers. However, this was found to be not optimal as this limits the size of the downcomer. Instead, placing the manhole at 90° of the downcomer, close to the edge of the sieve tray, provides a sieve tray with a large enough downcomer and a large continuous area for the cooling coils.

In some embodiments, the difference between the angle subtended at the center of the sieve tray by the second chord and the angle subtended at the center of the sieve tray by the chord of the downcomer is of from 0.5° to 5°. The difference between the angle subtended at the center of the sieve tray by the second chord and the angle subtended at the center of the sieve tray by the cord of the downcomer determines the area of the outlet calming zone between the zone comprising the through-holes and the downcomer. The area of the outlet calming zone may depend on several factors, such as the size of the tower, the envisioned production rate, and the velocity of the gas stream.

In some embodiments, the weir has a height ranging between 10.0 and 100.0 mm, or between 40.0 and 90.0 mm.

In some embodiments, the angle subtended at the center of the sieve tray by the cord of the downcomer ranges between 50.0° and 70.0°.

In some embodiments, the outlet calming zone has a width ranging between 50.0 and 100.0 mm.

In some embodiments, the manhole has a circular or rectangular shape. Rectangular and circular shapes are standard shape in the chemical industry for manholes. A circular shape minimizes the area of the manhole for a given minimum dimension in all directions.

In some embodiments, the sieve tray comprises cooling coils located above the area of the perforated plate comprising through-holes.

In some embodiments, the through-holes are circular, and the diameter of the through-holes is ranging between 2.0 and 13.0 mm.

In some embodiments, the sieve tray further comprises a plurality of baffles for increasing the residence time of the aqueous solution on the circular sieve tray. Without baffles, the aqueous solution would select the shortest pathway of less resistance on the sieve tray and the residence time of the aqueous solution on the sieve tray would be greatly reduced. The residence time is directly related to the overall efficiency of the absorption process in the tower, so increasing it leads to an improved performance of the tower. The number of baffles and design thereof may vary.

In another aspect, the present disclosure provides an absorption tower for nitric acid production comprising one or more circular sieve trays according to the present disclosure. Absorption towers can reach more than 50-meter high and can comprise more than 40 sieve trays. The absorption tower comprises a gas inlet, a gas outlet, a liquid inlet, and a liquid outlet. The absorption tower is configured such that a stream of gas circulates from the bottom of the tower to the top of the tower, and such that a stream of liquid, in particular an aqueous solution, circulated from the top of the tower to the bottom of the tower.

In another aspect, the present disclosure provides a method for producing nitric acid comprising the steps of:

a) directing a gaseous stream comprising nitrogen dioxide to the bottom of an absorption tower according to the present disclosure; and

b) directing an aqueous solution to a liquid inlet of the absorption tower according to the present disclosure.

In the present method, the absorption tower is provided with a gaseous stream comprising nitrogen dioxide and an aqueous solution. The gas stream comprising nitrogen dioxide may be prepared in an ammonia burner, wherein ammonia is burned in the presence of oxygen. The gas stream produced by an ammonia burner may be further processed before being directed to the absorption tower. The aqueous solution may comprise at least 95 wt.% of water. The aqueous solution may contain some additives or chemicals depending on its source. The aqueous solution may comprise some process condensate, i.e., water vapor that has been cooled and condensed to liquid water.

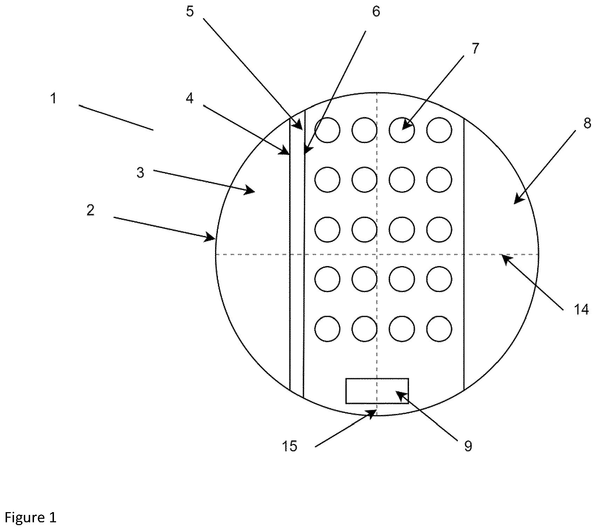

Figure 1 shows an embodiment of a sieve tray according to the present disclosure. The sieve tray 1 has a circular frame 2 and comprises four different zones:

- the downcomer 3, an empty zone or through-hole, configured to allow the aqueous solution to flow below the sieve tray;
- an outlet calming zone **5** separated from the downcomer **3** by a weir **4** and from the perforated area by a segment **6** of the sieve tray parallel to the weir **4;**
- a perforated area comprising through-holes **7;**
- an inlet calming zone **8** free of any through-holes, the area of the inlet calming zone **8** being equal to the area of the downcomer **3;** and
- a rectangular manhole **9,** the lid of the manhole comprising through-holes (not shown on figure), the centroid of the manhole **9** is located on the diameter **15** perpendicular to the diameter **14** bisecting the downcomer **3.**

For a sieve tray according to figure 1, the angle subtended at the center of the sieve tray by the cord of the downcomer **3** may be 60°, 60.5°, 61°, 61.5°, 62°, 62.5°, or 63°; and the angle subtended at the center of the sieve tray by the second chord **6** may be 61°, 61.5°, 62°, 62.5°, 63°, 63.5°, or 64°.

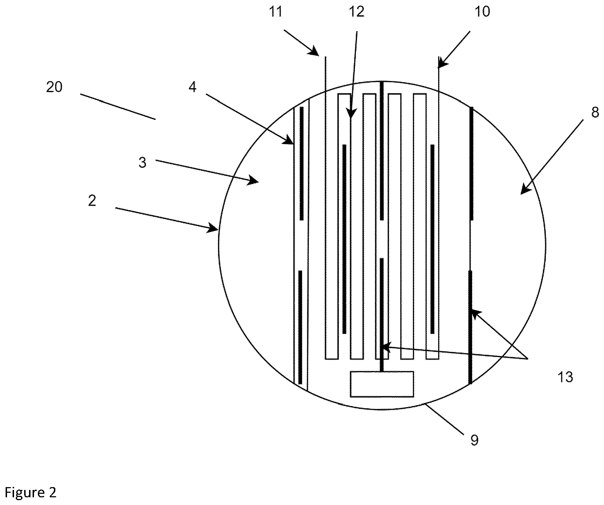

Figure 2 shows an embodiment of a sieve tray according to the present disclosure. The sieve tray **20** in Figure 2 has the same features as the sieve tray shown in Figure 1, but the through-holes **7** are omitted on Figure 2 for clarity purposes. The sieve tray **20** comprises several baffles **13** for guiding the aqueous solution in operation. A cooling coil **12,** comprising an inlet for a colling liquid **10** and an outlet for a cooling liquid **11,** is also positioned on the sieve tray **20.** It can be seen that the combination of the downcomer and the inlet calming zone being diametrically opposed and their respective chord being parallel with each other, and the location of the manhole **9,** offer a large, almost rectangular area for the layout of the cooling coil **12.**

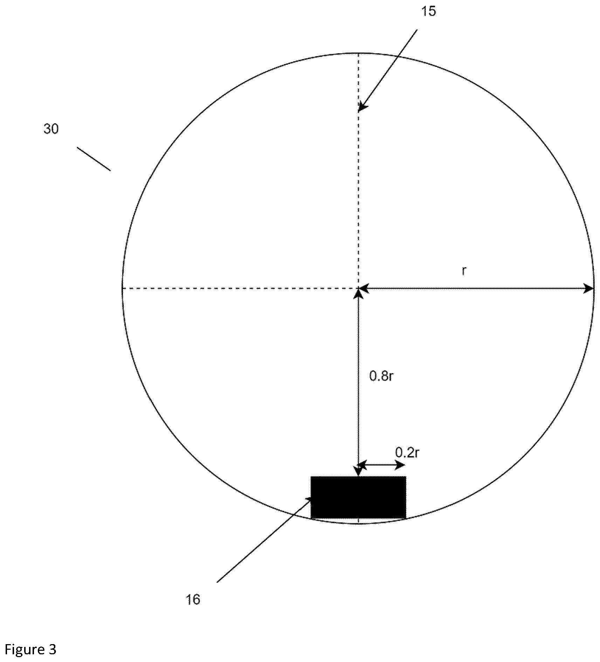

Figure 3 shows an embodiment of a circular sieve tray **30** according to the present disclosure. Figure 3 does not show all the features of the circular sieve tray 30 as shown on figure 1 and 2 to increase its clarity. The black zone **16** shows the area where the centroid of the manhole can be located. The minimum distance between the black zone **16** and the center of the circular sieve tray **30** is equal to 80% of the radius of the circular sieve tray **30,** and the black zone **16** has a width equal to 40% of the radius of the circular sieve tray **30** (20% on each side of the diameter **15**).

**Claims**

1. A circular sieve tray (1) for an absorber, wherein the circular sieve tray (1) is a perforated plate comprising through-holes (7), the circular sieve tray (1) comprising:

- a downcomer (3), wherein the downcomer (3) is a through-hole segment of the circular sieve tray (1) delimited by a chord and the associated arc of the circular sieve tray (1);
- a weir (4) located on the chord of the downcomer (3) for maintaining a set level of liquid on top of the circular sieve tray (1) in operation;
- an outlet calming zone (5) free of any through-holes (7), wherein the outlet calming zone (5) is delimited by the chord of the downcomer (3) and a second chord (6) parallel to the chord of the downcomer (3), wherein the difference between the angle subtended at the center of the circular sieve tray (1) by the second chord (6) and the angle subtended at the center of the circular sieve tray (1) by the cord of the downcomer (3) ranges between 0.50° and 10.0°;
- an inlet calming zone (8) free of any through-holes (7), the inlet calming zone (8) being a segment of the circular sieve tray (1) delimited by a chord and the associated arc of the circular sieve tray (1), the inlet calming zone (8) having the same surface area as the downcomer (3) and being positioned diametrically opposed to the downcomer (3); and
- a manhole (9) covered by a lid comprising through-holes (7), wherein:

  ◦ the distance between the centroid of the manhole (9) and the perpendicular projection of said centroid on the diameter (15) of the sieve tray (1) perpendicular to the diameter (14) bisecting the downcomer (3), is less than 20% of the radius of the circular sieve tray (1); and
  ◦ the distance from the center of the circular sieve tray (1) to the centroid of the manhole (9) is at least 80% of the radius of the sieve tray (1).

2. The circular sieve tray (1) according to claim 1, wherein the difference between the angle subtended at the center of the circular sieve tray (1) by the second chord (6) and the angle subtended at the center of the circular sieve tray (1) by the cord of the downcomer (3) ranges between 0.50° to 5.0°.

3. The circular sieve tray (1) according to claim 1 or 2, wherein the weir (4) has a height ranging between 10.0 and 100.0 mm.

4. The circular sieve tray (1) according to any one of claims 1 to 3, wherein the angle subtended at the center of the circular sieve tray (1) by the cord of the downcomer (3) ranges between 50.0° and 70.0°.

5. The circular sieve tray (1) according to any one of claims 1 to 4, wherein the manhole (9) has a circular or rectangular shape.

6. The circular sieve tray (1) according to any one of claims 1 to 5, wherein the circular sieve tray (1) further comprises one or more cooling coils (12) located above the area of the circular sieve tray (1) comprising through-holes (7).

7. The circular sieve tray (1) according to any one of claims 1 to 6, wherein the through-holes (7) are circular, and the diameter of the through-holes (7) ranges between 2.0 and 13.0 mm.

8. The circular sieve tray (1) according to any one of claims 1 to 7, further comprising a plurality of baffles (13) for increasing the residence time of the aqueous solution on the circular sieve tray (1).

9. An absorption tower for nitric acid production comprising one or more circular sieve trays according to any one of claims 1 to 8.

10. A method for producing nitric acid comprising the steps of:

  a) directing a gaseous stream comprising nitrogen dioxide to the bottom of an absorption tower according to claim 9; and
  b) directing an aqueous solution to a liquid inlet of the absorption tower according to claim 9.

Figure 1

Figure 2

Figure 3

**EUROPEAN SEARCH REPORT**

Europäisches
Patentamt

European
Patent Office

Office européen
des brevets

| | Application Number |
|---|---|
| | EP 23 20 0832 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 592 106 B1 (KOCH GLITSCH LP [US]) 15 July 2003 (2003-07-15) * figures 1, 2 * | 1-10 | INV. B01D3/22 B01D53/18 |
| A | US 4 133 852 A (DINICOLANTONIO ARTHUR R ET AL) 9 January 1979 (1979-01-09) * figures 1-3 * | 1-10 | |
| A | US 2 611 596 A (GLITSCH HANS C) 23 September 1952 (1952-09-23) * figure 1 * | 1-10 | |
| A | US 4 120 919 A (MCCLAIN ROBERT W) 17 October 1978 (1978-10-17) * figures 1,10,13 * | 1-10 | |
| A | US 5 454 989 A (NUTTER DALE E [US]) 3 October 1995 (1995-10-03) * figures 1, 5 * * column 4, lines 28-31 * | 1-10 | |
| A | US 2 681 820 A (RAPISARDA EDWARD D ET AL) 22 June 1954 (1954-06-22) * figure 1 * * column 2, lines 38-42 * | 1-10 | TECHNICAL FIELDS SEARCHED (IPC) B01D |
| A | DE 603 10 758 T2 (KOCH-GLITSCH, LP) 31 October 2007 (2007-10-31) * figures 1, 2, 8 * | 1-10 | |
| A | US 2 875 867 A (HART FRANK W) 3 March 1959 (1959-03-03) * figure 1 * | 1-10 | |
| A | US 7 931 871 B2 (TOTAL RAFFINAGE MARKETING [FR]) 26 April 2011 (2011-04-26) * figure 1 * * column 4, lines 59-61 * | 1-10 | |

The present search report has been drawn up for all claims

| Place of search | Date of completion of the search | Examiner |
|---|---|---|
| The Hague | 1 March 2024 | Van Ganswijk, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 20 0832

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2024

| Patent document cited in search report | | Publication date | Patent family member(s) | | Publication date |
|---|---|---|---|---|---|
| US 6592106 | B1 | 15-07-2003 | AT | E356657 T1 | 15-04-2007 |
| | | | AU | 2003235747 A1 | 24-07-2003 |
| | | | BR | 0302579 A | 25-02-2004 |
| | | | CA | 2440005 A1 | 17-07-2003 |
| | | | DE | 60312472 T2 | 29-11-2007 |
| | | | EP | 1463572 A1 | 06-10-2004 |
| | | | JP | 4331612 B2 | 16-09-2009 |
| | | | JP | 2005515054 A | 26-05-2005 |
| | | | KR | 20040082384 A | 24-09-2004 |
| | | | MX | PA03007988 A | 15-10-2004 |
| | | | US | 2003127755 A1 | 10-07-2003 |
| | | | WO | 03057339 A1 | 17-07-2003 |
| US 4133852 | A | 09-01-1979 | CA | 1098027 A | 24-03-1981 |
| | | | DE | 2721667 A1 | 16-03-1978 |
| | | | FR | 2364049 A1 | 07-04-1978 |
| | | | GB | 1577837 A | 29-10-1980 |
| | | | IT | 1077214 B | 04-05-1985 |
| | | | JP | S5334674 A | 31-03-1978 |
| | | | JP | S6051361 B2 | 13-11-1985 |
| | | | NL | 7705081 A | 15-03-1978 |
| | | | US | 4133852 A | 09-01-1979 |
| US 2611596 | A | 23-09-1952 | NONE | | |
| US 4120919 | A | 17-10-1978 | AU | 511402 B2 | 14-08-1980 |
| | | | BR | 7706823 A | 18-07-1978 |
| | | | CA | 1105372 A | 21-07-1981 |
| | | | DE | 2752392 A1 | 01-06-1978 |
| | | | ES | 463406 A1 | 16-12-1978 |
| | | | FR | 2371949 A1 | 23-06-1978 |
| | | | GB | 1562469 A | 12-03-1980 |
| | | | IT | 1086514 B | 28-05-1985 |
| | | | JP | S5367679 A | 16-06-1978 |
| | | | JP | S5620881 B2 | 16-05-1981 |
| | | | MX | 146437 A | 28-06-1982 |
| | | | NL | 7711850 A | 30-05-1978 |
| | | | US | 4120919 A | 17-10-1978 |
| US 5454989 | A | 03-10-1995 | AU | 2123795 A | 09-10-1995 |
| | | | GB | 2307424 A | 28-05-1997 |
| | | | US | 5454989 A | 03-10-1995 |
| | | | WO | 9525583 A1 | 28-09-1995 |
| US 2681820 | A | 22-06-1954 | NONE | | |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

**EP 23 20 0832**

This annex lists the patent family members relating to the patent documents cited in the above-mentioned European search report.
The members are as contained in the European Patent Office EDP file on
The European Patent Office is in no way liable for these particulars which are merely given for the purpose of information.

**01-03-2024**

| Patent document cited in search report | | Publication date | Patent family member(s) | | Publication date |
|---|---|---|---|---|---|
| DE 60310758 | T2 | 31-10-2007 | AR | 041479 A1 | 18-05-2005 |
| | | | AT | E349251 T1 | 15-01-2007 |
| | | | AU | 2003277029 A1 | 18-06-2004 |
| | | | CA | 2507160 A1 | 10-06-2004 |
| | | | DE | 60310758 T2 | 31-10-2007 |
| | | | EP | 1565242 A1 | 24-08-2005 |
| | | | US | 6629687 B1 | 07-10-2003 |
| | | | WO | 2004047944 A1 | 10-06-2004 |
| US 2875867 | A | 03-03-1959 | NONE | | |
| US 7931871 | B2 | 26-04-2011 | AU | 2005313193 A1 | 15-06-2006 |
| | | | BR | PI0518516 A2 | 25-11-2008 |
| | | | CA | 2589466 A1 | 15-06-2006 |
| | | | EP | 1838404 A1 | 03-10-2007 |
| | | | ES | 2602207 T3 | 20-02-2017 |
| | | | FR | 2878766 A1 | 09-06-2006 |
| | | | JP | 5172349 B2 | 27-03-2013 |
| | | | JP | 2008522804 A | 03-07-2008 |
| | | | KR | 20070086927 A | 27-08-2007 |
| | | | US | 2009047194 A1 | 19-02-2009 |
| | | | WO | 2006061516 A1 | 15-06-2006 |

EPO FORM P0459

For more details about this annex : see Official Journal of the European Patent Office, No. 12/82